# EUROPÄISCHE PATENTSCHRIFT

(11) **EP 1 762 163 B1**
(45) Veröffentlichungstag und Bekanntmachung des Hinweises auf die Patenterteilung: **12.03.2008**
(21) Anmeldenummer: 06018312.6
(22) Anmeldetag: 01.09.2006
(51) Int. Cl.: A47J 31/44

(54) **Getränkebereiter, insbesondere Kaffeeautomat**
Beverage making machine, in particular a coffee machine
Appareil de préparation de boissons, en particulier cafetière

(30) Priorität: 12.09.2005 DE 10543564; 06.10.2005 DE 10548164
(43) Veröffentlichungstag der Anmeldung: 14.03.2007
(73) Patentinhaber: Miele & Cie. KG, 33332 Gütersloh (DE)
(72) Erfinder: Erdmann, Torsten, 59269 Beckum (DE); Liemke, Frank, 33330 Gütersloh (DE); Müller, Diana, 33332 Gütersloh (DE); Nattkemper, Jörg, 59065 Hamm (DE); Pohlmann, Verena, 1090 Bruxelles (BE); van Pels, Ulrich, 33378 Rheda-Wiedenbrück (DE)

(56) Entgegenhaltungen:
- EP-A1- 0 783 859
- DE-A1- 10 210 161
- US-A- 3 195 588
- US-A- 3 326 115

## Beschreibung

Die Erfindung betrifft einen Getränkebereiter, insbesondere Kaffeeautomat, umfassend einen als Gehäuse ausgebildeten Korpus, der als separates Teil oder als Einbauteil in einem Schrank ausgebildet ist, wobei die Gehäusefrontseite als Tür ausgebildet ist, in der ein Ausgabebereich zur Aufnahme eines Trinkgefäßes eingeformt ist, und wobei hinter der als Tür ausgebildeten Gehäusefrontseite, die für die Getränkebereitung erforderlichen Behältnisse für die Vorsorge und Entsorgung angeordnet sind, und wobei der Ausgabebereich wenigstens über eine Beleuchtungseinrichtung verfügt, dessen Lichtquelle den Ausgabebereich ausleuchtet.

Ein derartiger Getränkebereiter ist beispielsweise aus der DE 28 55 378 A1 bekannt. Bei diesem Getränkebereiter ist die Beleuchtungseinrichtung als elektrischer Leuchtkörper ausgebildet und an einem durch die Decke des Ausgabebereichs nach oben optisch abgeschirmten Ort angeordnet, um so zu erreichen, dass der Benutzer ein Trinkgefäß zielgerecht richtig in den Ausgabebereich stellt.

Eine andere Ausführungsform des Standes der Technik wird in der DE 102 10 161 B4 beschrieben, wobei bei dieser Ausführungsform die Beleuchtungseinrichtung eine in dem Innern des Korpus angeordnete Lichtquelle umfasst, die mit einem Lichtleiter zusammenwirkt, der das ausgestrahlte Licht in den Ausgabebereich leitet.

Ein Nachteil bei den aus diesem Stand der Technik bekannten Getränkebereitern ist, dass eine Ausleuchtung ausschließlich im Bereich der Ausgabe gegeben ist. Zu dem baut insbesondere die letztgenannte Beleuchtungseinrichtung aufwendig, da sie mit einem Lichtleiter zusammenwirkt, um das Licht gezielt wirken zu lassen.

Ferner ist aus der US 3,195,588 ein Getränkebereiter bekannt, der einen als Gehäuse ausgebildeten Korpus umfasst, der als separates Einzelteil oder als Einbauteil in einem Schrank ausgebildet ist, wobei hinter der Gehäusefrontseite in einem rückwärtigen Bereich die für die Getränkebereitung erforderlichen Behältnisse für die Vorsorge und Entsorgung angeordnet sind, und wobei ein Ausgabebereich zur Aufnahme eines Trinkgefäßes wenigstens über eine Beleuchtungseinrichtung verfügt, deren Lichtquelle den Ausgabebereich ausleuchtet und die Beleuchtungseinrichtung derart an oder in dem Gehäuse angeordnet ist, dass der Lichtkegel der Lichtquelle sowohl den Ausgabebereich zumindest bei vollständig geschlossener Tür, als auch den rückwärtigen Bereich der Getränkebereitung zumindest bei vollständig geöffneter Tür ausleuchtet.

In der EP 0 783 859 A1 ist darüber hinaus ein Getränkebereiter beschrieben, bei dem die Gehäusefrontseite als Tür ausgebildet ist, in der der Ausgabebereich eingeformt ist.

Der Erfindung stellt sich somit das Problem, einen Getränkebereiter anzugeben, der eine Beleuchtungseinrichtung aufweist, die einfach im Aufbau ist und die eine höhere Effizienz hat.

Erfindungsgemäß wird dieses Problem durch einen Getränkebereiter mit den Merkmalen des Anspruchs 1 gelöst. Vorteilhafte Ausgestaltungen und Weiterbildungen der Erfindung ergeben sich aus den nachfolgenden Unteransprüchen.

Die mit der Erfindung erreichbaren Vorteile bestehen darin, dass die erfindungsgemäße Beleuchtungseinrichtung die Ausleuchtung des Gehäuseinnenraums ohne zusätzliche Beleuchtungsmittel wesentlich verbessert. Hierzu ist die Beleuchtungseinrichtung im oberen Eckbereich des Gehäuses so angeordnet, dass der Lichtkegel der Lichtquelle sowohl den Ausgabebereich bei geschlossener Tür, als auch den rückwärtigen Bereich der Getränkebereitung bei geöffneter Tür ausleuchtet. Hier wirkt sie nicht störend und stellt auch keine Behinderung für die Entsorge- und die Vorsorgebehältnisse in dem Getränkebereiter dar. Die Ausleuchtung des Ausgabebereichs ist erfindungsgemäß zumindest bei vollständig geschlossener Tür und die Ausleuchtung des rückwärtigen Bereichs der Getränkebereitung ist zumindest bei vollständig geöffneter Tür gegeben. Im Normalfall wird es jedoch so sein, dass bei der Überführung der Tür von der geschlossenen Lage, in der sie den rückwärtigen Bereich verdeckt, in die vollständig geöffnete Lage, in der der Benutzer in gewünschter Weise auf den rückwärtigen Bereich und darin angeordnete Bauteile und Komponenten zugreifen kann, Zwischenzustände der Beleuchtung vorliegen, in denen teilweise noch der Ausgabebereich und teilweise bereits der rückwärtige Bereich von der Lichtquelle beleuchtet werden. Somit wird auch zu Revisionszecken des Getränkebereiters und hier bei der Handhabung der Behältnisse, die im rückwärtigen Bereich des Getränkebereiters untergebracht sind, eine Ausleuchtung des Innenraums bereitgestellt. Diese Ausleuchtung erleichtert einerseits die Handhabung der Behältnisse für die Vorsorge bzw. die Entsorgung, weil die Beleuchtungseinrichtung ebenfalls auch für diese Situation, wenn die Tür mit dem Ausgabebereich weggeschwenkt ist, ihre Wirkung entfaltet.

In vorteilhafter Ausgestaltung ist die Beleuchtungseinrichtung in einer an der Gehäusewand vorgesehenen Kammer angeordnet. Sie ist somit vor Feuchtigkeit geschützt. Als Leuchtmittel weist die Beleuchtungseinrichtung ein LED-Leuchtmittel auf, so dass eine hinreichende Lebensdauer für das Leuchtmittel sichergestellt wird.

In Weiterbildung der Erfindung ist das Leuchtmittel in einer Fassung angeordnet, die in ein Leuchtmittelgehäuse mittels einer Klips- und Rastverbindung einsetzbar ist. Hierbei ist an der Unterseite des Leuchtmittelgehäuses eine transparente Scheibe mittels Rasten festgelegt. Hinsichtlich der konstruktiven Ausgestaltung bildet hierbei die transparente Scheibe den Bodenbereich der Kammer für die Beleuchtungseinrichtung, wobei der Bodenbereich ebenfalls einen Teilbereich des oberen Ausgabebereichs bildet. Durch diese Ausbildung wird insbesondere der Doppeleffekt erreicht, dass die Beleuchtungseinrichtung einerseits ihre Strahlwirkung bei geschlossener Tür dem Ausgabebereich bereitstellt, wobei andererseits, wenn die Tür geöffnet ist, die Beleuchtungseinrichtung den rückwärtigen Bereich des Getränkebereiters mit seinen Vorsorge- und Entsorgebehältnissen ausleuchtet.

In Weiterbildung der Erfindung kann vorgesehen werden, dass jeweils eine Beleuchtungseinrichtung in den oberen Eckbereichen des Gehäuses vorgesehen ist, so dass eine beidseitige Ausleuchtung des Ausgabebereichs bzw. des rückwärtigen Bereichs erreicht wird. Im Türfeld zwischen der Beleuchtungseinrichtung kann dabei eine Bedieneinheit für den Automaten angeordnet sein, wobei sich unterhalb der Bedieneinheit der eingeformte Ausgabebereich anschließt.

Ein Ausführungsbeispiel der Erfindung ist in den Zeichnungen 1 bis 3 rein schematisch dargestellt und wird nachfolgend näher beschrieben. Es zeigen:
- Figur 1:: eine perspektivische Darstellung eines Getränkebereiters mit Ausschnitten, in denen eine Beleuchtungseinrichtung zu erkennen ist;
- Figur 2:: eine weitere perspektivische Darstellung eines Getränkebereiters gemäß der Figur 1, ohne Gehäusefrontseite, ebenfalls mit Ausschnitten, in denen die Beleuchtungseinrichtung zu erkennen ist und
- Figur 3:: eine explosionsartige Darstellung der Beleuchtungseinrichtung für einen Getränkebereiter gemäß der Figur 1 und 2.

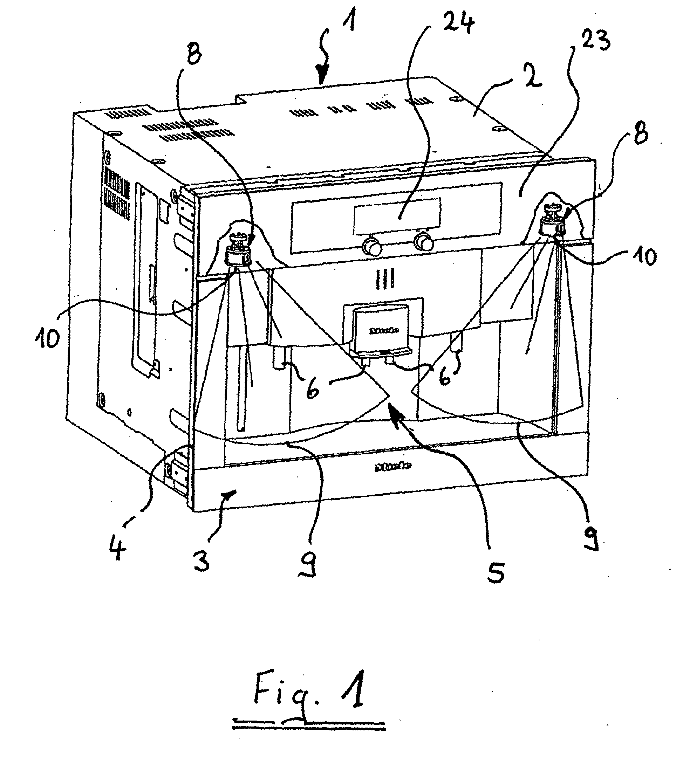

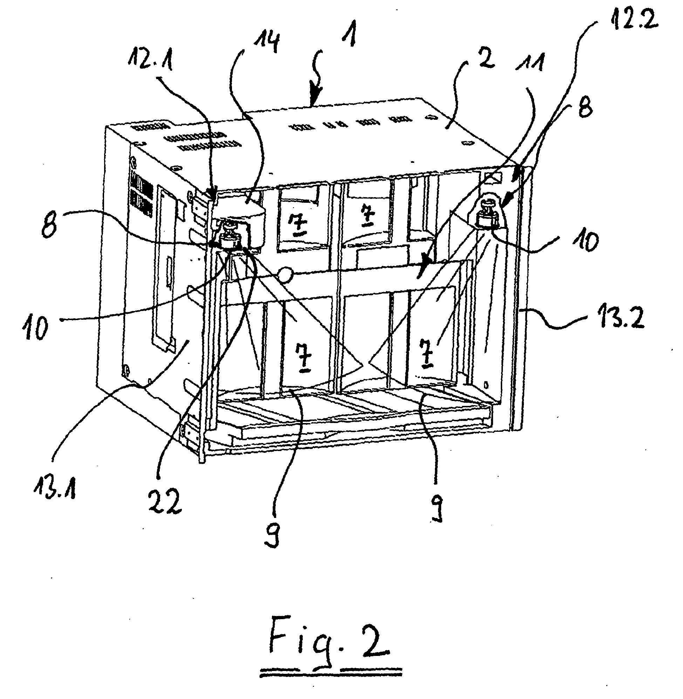

Die Figuren 1 und 2 zeigen jeweils in perspektivischer Darstellung einen Getränkebereiter 1, und hier insbesondere einen Kaffeeautomat, der einen als Gehäuse 2 umfassenden Korpus aufweist, der, wie insbesondere in den Figuren 1 und 2 dargestellt ist, als separates Teil in einen nicht näher dargestellten Schrank eingesetzt werden kann. Denkbar ist auch, dass der Getränkebereiter 1 als separates Einzelteil also als freistehendes Gerät ausgebildet sein kann. Dabei ist die Gehäusefrontseite 3 als Tür 4 ausgebildet, die, nicht näher dargestellt, vom Gehäuse 2 weggeschwenkt werden kann. In der Tür 4 ist ein Ausgabebereich 5 zur Aufnahme eines nicht näher dargestellten Trinkgefäßes eingeformt, wobei in dem Ausgabebereich 5 entsprechend Ausgabedüsen 6 für Kaffee, Wasser, Milch oder Wasserdampf angeordnet sein können. Hinter der als Tür 4 ausgebildeten Gehäusefrontseite 3, wie es insbesondere in der Figur 2 dargestellt ist, sind die für die Getränkebereitung erforderlichen Behältnisse 7 für die Vorsorge und Entsorge angeordnet. So können beispielsweise diese Behältnisse 7 Frischwasser, Kaffeemehl oder Kaffeebohnen, Milch oder aber auch das gebrauchte Kaffeemehl aufnehmen.

Zur Ausleuchtung des Ausgabebereiches verfügt der Getränkebereiter 1 über zwei Beleuchtungseinrichtungen 8, deren Lichtquellen den Ausgabebereich 5 ausleuchten. Im nachfolgenden wird eine der Beleuchtungseinrichtungen 8 näher erläutert. Da die beiden Beleuchtungseinrichtungen 8 identisch aufgebaut sind, gelten die Ausführungen für beide Beleuchtungseinrichtungen 8. Grundsätzlich ist die Anzahl und Anordnung der Beleuchtungseinrichtungen 8 in geeigneten Grenzen frei wählbar. Aus der Zusammenschau der Figur 1 und 2 wird die Effizienz bzw. der erfindungsgemäße Effekt der Beleuchtungseinrichtung 8 deutlich, wobei die Beleuchtungseinrichtung 8 im oberen Bereich des Gehäuses 2 derart angeordnet ist, dass der Lichtkegel 9 der Lichtquelle 10 unabhängig von der Schwenkstellung der Tür 4 wirkt, so dass sowohl bei geschlossener Tür 4 der Ausgabebereich 5 ausgeleuchtet wird, und wobei, wie in der Figur 2 deutlich wird, auch wenn die Tür 4 aufgeschwenkt ist, die Beleuchtungseinrichtung 8 den rückwärtigen Bereich 11, also hier den Vorsorge- und Entsorgungsbereich des Getränkebereiters 1 ausleuchtet, so dass auch zu Wartungs- und Revisionszwecken der Innenraum des Getränkebereiters 1 ausgeleuchtet ist. Der Benutzer kann in einfacher und leichter Weise die Behältnisse 7 erkennen und auch bedienen.

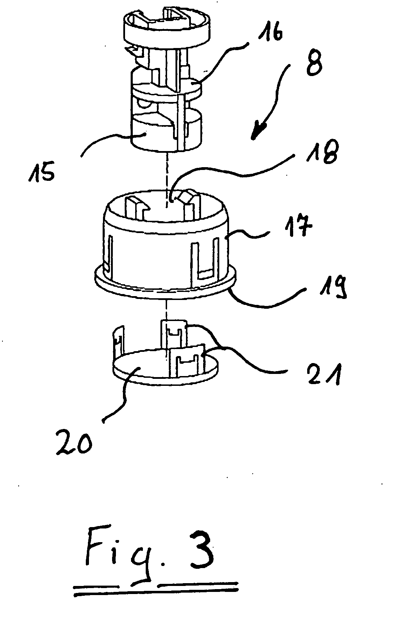

Wie bereits schon ausgeführt, ist die Beleuchtungseinrichtung 8 in einem der oberen Eckbereiche 12.1, 12.2 des Gehäuses 2 eingefasst. Die Beleuchtungseinrichtung 8 ist dabei in einer an der Gehäuseseitenwand 13.1, 13.2 vorgesehenen Kammer 14 angeordnet.
Die Beleuchtungseinrichtung 8 als solches, näher dargestellt in der Figur 3, umfasst ein Leuchtmittel 15, welches als LED-Leuchtmittel ausgebildet ist. Das Leuchtmittel 15 ist in einer Fassung 16 angeordnet, die in ein Leuchtmittelgehäuse 17 mittels einer Klipps- oder Rastverbindung 18 einsetzbar ist. An der Unterseite 19 des Leuchtmittelgehäuses 17 ist eine transparente Scheibe 20 ebenfalls mittels Rasten 21 festgelegt.

Es versteht sich nun von selbst, dass zur Montage der Beleuchtungseinrichtung 8 zunächst die Fassung 16 mit dem Leuchtmittel 15 in das Leuchtmittelgehäuse 17 eingedrückt wird, bis die Verrastung erfolgt, wobei dann von unten her in einfacher Weise die Scheibe 20 mit ihren Rasten 21 an dem Leuchtmittelgehäuse 17 festgelegt wird. Diese so montierte Beleuchtungseinrichtung 8 wird dann in die dafür vorgesehene Kammer 14 eingesetzt, wobei die transparente Scheibe 20 dann den Bodenbereich 22 der Kammer 14 einnimmt, wobei der Bodenbereich 22 der Kammer 14 dann auch ebenfalls, wie dargestellt in der Figur 1, einen Teilbereich des oberen Ausgabebereichs 5 bildet. Somit wird deutlich, wie die erfindungsgemäße Beleuchtungseinrichtung 8 wirkt, so dass sie bei geschlossener Tür 4 den Ausgabebereich 5 ausleuchtet, wobei, wenn die Tür 4 geöffnet oder vom Gehäuse 2 getrennt ist, wie dies in der Figur 2 dargestellt ist, in gleicher Weise wirkt, wobei sie dann den Innenraum des Gehäuses 2 ausleuchtet.

In Weiterbildung, wie in den Figuren 1 und 2 dargestellt, ist jeweils eine Beleuchtungseinrichtung 8 in den oberen Rechteckbereichen 12.1 und 12.2 vorgesehen, so dass eine beidseitige Ausleuchtung gewährleistet wird. Wie noch aus der Figur 1 zu erkennen ist, ist zwischen den Beleuchtungseinrichtungen 8 im Türfeld 23 eine Bedieneinheit 24 für den Automaten 1 angeordnet.

## Patentansprüche

1. Getränkebereiter (1), insbesondere Kaffeeautomat, umfassend einen als Gehäuse (2) ausgebildeten Korpus, der als separates Einzelteil oder als Einbauteil in einem Schrank ausgebildet ist, wobei die Gehäusefrontseite (3) als Tür (4) ausgebildet ist, in der der Ausgabebereich (5) eingeformt ist wobei hinter der Gehäusefrontseite (3) in einem rückwärtigen Bereich (11) die für die Getränkebereitung erforderlichen Behältnisse (7) für die Vorsorge und Entsorgung angeordnet sind, und wobei ein Ausgabebereich (5) zur Aufnahme eines Trinkgefäßes wenigstens über eine Beleuchtungseinrichtung (8) verfügt, deren Lichtquelle (10) den Ausgabebereich (5) ausleuchtet und
**dadurch gekennzeichnet, dass** die Beleuchtungseinrichtung (8) derart an oder in dem Gehäuse (2) angeordnet ist, dass der Lichtkegel (9) der Lichtquelle (10) sowohl den Ausgabebereich (5) zumindest bei vollständig geschlossener Tür (4), als auch den rückwärtigen Bereich (11) der Getränkebereitung zumindest bei vollständig geöffneter Tür (4) ausleuchtet und die Beleuchtungseinrichtung (8) in einem der oberen Eckbereiche (12.1, 12.2) des Gehäuses (2) eingefasst ist.

2. Getränkebereiter (1) nach Anspruch 1,
**dadurch gekennzeichnet,**
**dass** die Beleuchtungseinrichtung (8) in einer an der Gehäusewand (13.1, 13.2) vorgesehenen Kammer (14) angeordnet ist.

3. Getränkebereiter (1) nach Anspruch 2,
**dadurch gekennzeichnet,**
**dass** die Beleuchtungseinrichtung (8) ein Leuchtmittel (15) aufweist, welches als LED-Leuchtmittel ausgebildet ist.

4. Getränkebereiter (1) nach Anspruch 3,
**dadurch gekennzeichnet,**
**dass** das Leuchtmittel (15) in einer Fassung (16) angeordnet ist, die in ein Leuchtmittelgehäuse (17) mittels einer Klipps- oder Rastverbindung (18) einsetzbar ist.

5. Getränkebereiter (1) nach Anspruch 4,
**dadurch gekennzeichnet,**
**dass** an der Unterseite (19) des Leuchtmittelgehäuses (17) eine transparente Scheibe (20) mittels Rasten (21) festgelegt ist.

6. Getränkebereiter (1) nach Anspruch 5,
**dadurch gekennzeichnet,**
**dass** die transparente Scheibe (20) den Bodenbereich (22) der Kammer (14) für die Beleuchtungseinrichtung (8) bildet, und wobei der Bodenbereich (14) ebenfalls einen Teilbereich des oberen Ausgabebereichs (5) bildet.

7. Getränkebereiter (1) nach Anspruch 1 bis 6,
**dadurch gekennzeichnet,**
**dass** jeweils eine Beleuchtungseinrichtung (8) in den oberen Eckbereichen (12.1) und (12.2) des Gehäuses (2) vorgesehen ist.

8. Getränkebereiter (1) nach Anspruch 7,
**dadurch gekennzeichnet,**
**dass** zwischen den Beleuchtungseinrichtungen (8) im Türfeld (23) eine Bedieneinheit (24) für den Automaten angeordnet ist.

## Claims

1. Beverage dispenser (1), more especially an automatic coffee machine, comprising a body that is in the form of a housing (2) and is configured as a separate component or as a part that is built-into a cabinet, wherein the front side (3) of the housing is in the form of a door (4), in which is provided the discharge region (5), wherein the receptacles (7) for storage and disposal necessary for dispensing the beverage are disposed behind the front side (3) of the housing in a rear region (11), and wherein a discharge region (5) for accommodating a drinking vessel has at least one lighting device (8), the light source (10) of which illuminates the discharge region (5), **characterised in that** the lighting device (8) is disposed on or in the housing (2) in such a manner that the cone of light (9) of the light source (10) illuminates both the discharge region (5) at least with the door (4) completely closed and also the rear region (11) of the beverage dispensing at least with the door (4) completely open and the lighting device (8) is mounted in one of the upper corner regions (12.1, 12.2) of the housing (2).

2. Beverage dispenser (1) according to claim 1, **characterised in that** the lighting device (8) is disposed in a chamber (14) provided on the housing wall (13.1, 13.2).

3. Beverage dispenser (1) according to claim 2, **characterised in that** the lighting device (8) includes a lighting means (15), which is in the form of an LED lighting means.

4. Beverage dispenser (1) according to claim 3, **characterised in that** the lighting means (15) is disposed in a socket (16), which is insertable into a lighting means housing (17) by means of a clip or locking connection (18).

5. Beverage dispenser (1) according to claim 4, **characterised in that** a transparent disc (20) is secured to the underside (19) of the lighting means housing (17) by means of notches (21).

6. Beverage dispenser (1) according to claim 5, **characterised in that** the transparent disc (20) forms the bottom region (22) of the chamber (14) for the lighting device (8), and wherein the bottom region (14) also forms a part region of the upper discharge region (5).

7. Beverage dispenser (1) according to claim 1 to 6, **characterised in that** in each case a lighting device (8) is provided in the upper corner regions (12.1) and (12.2) of the housing (2).

8. Beverage dispenser (1) according to claim 7, **characterised in that** a control unit (24) for the automatic machine is disposed between the lighting devices (8) in the door field (23).

## Revendications

1. Appareil de préparation de boissons (1), notamment cafetière électrique, comprenant un corps réalisé comme un boîtier (2) qui est réalisé comme une pièce détachée séparée ou comme une pièce d'insertion dans une armoire, la face frontale du boîtier (3) étant réalisée comme une porte (4), dans laquelle est moulée la zone de sortie (5), les récipients (7) nécessaires à la préparation de boissons pour la prévoyance et l'élimination étant disposés derrière la face frontale du boîtier (3) dans une zone (11) arrière, et une zone de sortie (5) pour la réception d'un récipient pour boire disposant au moins d'un dispositif d'éclairage (8), dont la source de lumière (10) éclaire la zone de sortie (5),
**caractérisé en ce que**
le dispositif d'éclairage (8) est disposé sur ou dans le boîtier (2) de telle sorte que le cône lumineux (9) de la source de lumière (10) éclaire aussi bien la zone de sortie (5), au moins lorsque la porte (4) est complètement fermée, que la zone (11) arrière de la préparation de boissons au moins lorsque la porte (4) est complètement ouverte et le dispositif d'éclairage (8) est inséré dans l'une des zones angulaires supérieures (12.1, 12.2) du boîtier (2).

2. Appareil de préparation de boissons (1) selon la revendication 1,
**caractérisé en ce**
**que** le dispositif d'éclairage (8) est disposé dans une chambre (14) prévue sur la paroi de boîtier (13.1, 13.2).

3. Appareil de préparation de boissons (1) selon la revendication 2,
**caractérisé en ce**
**que** le dispositif d'éclairage (8) présente un moyen d'éclairage (15) qui est réalisé comme un moyen d'éclairage à DEL.

4. Appareil de préparation de boissons (1) selon la revendication 3,
**caractérisé en ce**
**que** le moyen d'éclairage (15) est disposé dans une douille (16) qui peut être insérée dans un boîtier de moyen d'éclairage (17) au moyen d'un assemblage par clips ou par enclenchement (18).

5. Appareil de préparation de boissons (1) selon la revendication 4,
**caractérisé en ce**
**que** sur le dessous (19) du boîtier de moyen d'éclairage (17) est fixé un disque transparent (20) au moyen de crans d'arrêt (21).

6. Appareil de préparation de boissons (1) selon la revendication 5,
**caractérisé en ce**
**que** le disque transparent (20) forme la zone de fond (22) de la chambre (14) pour le dispositif d'éclairage (8), et la zone de fond (14) formant également une zone partielle de la zone de sortie supérieure (5).

7. Appareil de préparation de boissons (1) selon les revendications 1 à 6,
**caractérisé en ce**
**qu'**un dispositif d'éclairage (8) est respectivement prévu dans les zones angulaires supérieures (12.1) et (12.2) du boîtier (2).

8. Appareil de préparation de boissons (1) selon la revendication 7,
**caractérisé en ce**
**qu'**entre les dispositifs d'éclairage (8) dans la baie de porte (23) est disposée une unité de commande (24) pour la machine automatique.
